Europäisches Patentamt

European Patent Office

Office européen des brevets

(11) Veröffentlichungsnummer: **0 480 459 A1**

## (12) EUROPÄISCHE PATENTANMELDUNG

(21) Anmeldenummer: **91117382.1**

(22) Anmeldetag: **11.10.91**

(51) Int. Cl.5: **F16F 13/00**, F16F 3/08, B60K 5/12

(30) Priorität: **12.10.90 DE 4032503**
     **13.09.91 DE 4130362**

(43) Veröffentlichungstag der Anmeldung:
     **15.04.92 Patentblatt 92/16**

(84) Benannte Vertragsstaaten:
     **DE ES FR GB IT**

(71) Anmelder: **METZELER GIMETALL AG**
     **Gneisenaustrasse 15**
     **W-8000 München 50(DE)**

(72) Erfinder: **Härtel, Volker, Dr.**
     **Fichtenstrasse 50**
     **W-8034 Germering(DE)**
     Erfinder: **Richter, Matthias, Dr.**
     **Walchstadterstrasse 16**
     **W-8084 Inning(DE)**
     Erfinder: **Höglinger, Gerhard**
     **Zinnkopfstrasse 7**
     **W-8200 Rosenheim(DE)**

(74) Vertreter: **Michelis, Theodor, Dipl.-Ing. et al**
     **Seibert + Michelis Rechtsanwälte und**
     **Patentanwälte Tattenbachstrasse 9**
     **W-8000 München 22(DE)**

(54) Verfahren zur Variation der Federsteifigkeit eines Elastomerlagers und entsprechendes Lager.

(57) Bei einem reinen Elastomer-Lager als Motorlager für Kraftfahrzeuge mit zwei zumindest zeitweise in Reihe geschalteten Gummikörpern (1, 2) ist zur Variation der Federsteifigkeit, abhängig von vorgegebenen Betriebsparametern, erfindungsgemäß vorgesehen, daß von den beiden in Reihe geschalteten Gummikörpern (1, 2) einer der beiden Gummikörper (2) in Abhängigkeit vorgegebener Betriebsparameter zeitweise mittels einer gesonderten, von außen aufgebrachten Kraft derart von starren Bauteilen (8) des Lagers überbrückt wird, daß nur noch der andere der beiden Gummikörper (1) elastisch wirksam die eingeleiteten Kräfte aufnimmt.

Fig.1

Die Erfindung bezieht sich auf ein Verfahren zur Variation der Federsteifigkeit eines Elastomer-Lagers als Motorlager für Kraftfahrzeuge, mit zwei, zumindest zeitweise in Reihe geschalteten Gummikörpern sowie ein entsprechendes elastisches Lager.

Moderne Motorlager haben die Aufgabe, sowohl die verschiedenen statischen und dynamischen Motorhaltekräfte, die im Fahrbetrieb auftreten, aufzunehmen und die daraus resultierenden niederfrequenten Schwingungen des Motors zu bedämpfen und darüberhinaus die Übertragung von akustischen Schwingungen, die sich vom Motor auf die Karosserie und damit den Fahrgastraum ausbreiten, zu unterbinden. Damit müssen solche Lager im niederfrequenten und im hochfrequenten Bereich unterschiedliche Eigenschaften hinsichtlich Steifigkeit und Verlustwinkel der Dämpfung aufweisen. Dies bedingt bei der Auslegung eines solchen Lagers erhebliche Kompromisse, die bei ungünstigen Bedingungen weit vom jeweiligen Optimum liegen können. Gute Ergebnisse wurden bisher bei der Verwendung bekannter hydraulisch gedämpfter Motorlager erreicht, die eine hohe Dämpfung niederfrequenter Schwingungen bewirken und gleichzeitig eine gezielte Entkopplung hochfrequenter Schwingungen ermöglichen. Aber auch bei solchen Lagern sind die Eigenschaften im niederfrequenten und im hochfrequenten Bereich nicht unabhängig voneinander einstellbar, wodurch die Abstimmung auf die jeweils geforderten Werte sehr aufwendig wird. Darüberhinaus ist bei solchen hydraulisch gedämpften Motorlagern im allgemeinen eine Veränderung der dynamischen Steifigkeit nur in axialer, d.h. in vertikaler Richtung möglich, während sie in radialer Richtung weitgehend unverändert bleibt, so daß eine gesteuerte Steifigkeitsänderung, die sich den jeweiligen Betriebszuständen anpaßt, nicht möglich ist.

Der vorliegenden Erfindung liegt daher die Aufgabe zugrunde, ausgehend von einem reinen Elastomer-Lager, ein Verfahren anzugeben, mit dem die Federsteifigkeit und die Dämpfung eines solchen Lagers abhängig von vorgegebenen Betriebsparametern variiert werden kann, und zwar in dem Sinne, daß ein solches Lager bei niederen Drehzahlen und damit großen Schwingungsamplituden insbesondere im Leerlauf relativ weich und bei höheren Betriebsdrehzahlen relativ hart ist.

Es ist in diesem Zusammenhang aus der DD-PS 111.447 ein Elastomer-Lager mit zwei hintereinander geschalteten hohlzylindrischen Gummikörpern bekannt, die jeweils unterschiedliche Federkonstante aufweisen und bei der bei hohen Belastungen der eine Federkörper soweit zusammengepreßt wird, daß die ihn umgebenden Gehäuseteile miteinander in Kontakt kommen und damit dieser Federkörper außer Funktion kommt. Damit ist zwar auch eine Änderung der Federsteifigkeit eines solchen Lagers möglich, jedoch allein abhängig von der jeweiligen Belastung und ohne zusätzliche Eingriffsmöglichkeiten von außen.

Zur Lösung der vorstehend genannten Aufgabe ist, ausgehend von dem bekannten Stand der Technik, erfindungsgemäß vorgesehen, daß von den beiden in Reihe geschalteten Gummikörpern einer der beiden Gummikörper in Abhängigkeit vorgegebener Betriebsparameter zeitweise mittels einer gesonderten, von außen aufgebrachten Kraft derart von starren Bauteilen des Lagers überbrückt wird, daß nur noch der andere der beiden Gummikörper elastisch wirksam die eingeleiteten Kräfte aufnimmt.

Damit ist es also möglich, die Federsteifigkeit eines reinen Gummilagers zwischen einer "weichen" und einer "harten" Kennlinie je nach vorgegebenen Anforderungen und Betriebsparametern zu variieren.

Zweckmäßigerweise erfolgt dabei die Überbrückung des zweiten Federkörpers in Abhängigkeit von der Motordrehzahl.

Die Überbrückung des zweiten Federkörpers kann dabei mittels eines hydraulisch beaufschlagten Druckkissens erfolgen, derart, daß zwei, die zweite Gummifeder zwischen sich einschließende starre Gehäuseteile kraftschlüssig miteinander in Kontakt gebracht werden.

Es ist aber auch möglich, daß die Überbrückung mittels mechanischer Stellmittel vorgenommen wird, derart, daß zwei die zweite Gummifeder zwischen sich einschließende Gehäuseteile durch Spreizung kraftschlüssig miteinander in Kontakt gebracht werden.

Darüberhinaus bezieht sich die Erfindung auf ein elastisches Lager, insbesondere Motorlager für Kraftfahrzeuge, mit zwei in Reihe übereinander angeordneten Gummikörpern, bei dem erfindungsgemäß die beiden Gummikörper rotationssymmetrisch ausgebildet sind, der eine Gummikörper zwischen einer Motorlagerplatte und einer Abstützplatte und der zweite Gummikörper zwischen dieser Abstützplatte und einer karosserieseitig angelenkten Halteplatte festgelegt sind und der zweite Gummikörper von einem diesen teilweise umfassenden, ringförmigen Gehäuse umgeben ist, dessen eine Stirnseite mit einer der beiden, den zweiten Gummikörper begrenzenden Platten starr verbunden und dessen andere Stirnseite den Rand der anderen Platte mit Spiel derart umfaßt, daß bei Einschalten eines Spreizmittels zwischen den beiden Platten diese in kraftschlüssiger Anlage zum Gehäuse kommen und den zweiten Gummikörper überbrücken.

Zweckmäßigerweise ist der zweite Gummikörper als rotationssymmetrischer Hohlkörper ausgebildet.

Dabei kann der zweite Gummikörper am unteren Außenumfang einen schräg nach innen geneigten, ringförmigen Ansatz aus einem anvulkanisierten Metallring aufweisen, der den Rand der karosserieseitigen Halteplatte umgreift, und das ringförmige Gehäuse oberseitig mit der Abstützplatte starr verbunden sein, und dessen unterseitiger schräg eingezogener Rand einen vertikalen Freiweg gegenüber der Unterseite des ringförmigen Ansatzes aufweisen.

Es ist aber auch möglich, daß der zweite Gummikörper einen größeren Außendurchmesser als der obere Gummikörper aufweist und daß das ringförmige Gehäuse unterseitig mit der karosserieseitigen Halteplatte starr verbunden ist und oberseitig den radial überstehenden Bereich des zweiten Gummikörpers mit einem eingezogenen Rand unter Bildung eines vertikalen Freiweges übergreift.

Das Spreizmittel zum Überbrücken des zweiten Gummikörpers kann aus einem hydraulisch beaufschlagbaren Druckkissen bestehen, das durch eine zwischen dem zweiten Gummikörper und der karosserieseitigen Halteplatte eingespannten flexiblen Membran einerseits und der Halteplatte selbst andererseits begrenzt ist.

Dabei sollte die Halteplatte eine regelbare Zuführung für eine Hydraulikflüssigkeit aufweisen.

Das Spreizmittel kann aber auch aus einem zwischen der karosserieseitigen Halteplatte und dem zweiten Gummikörper angeordneten mechanischen Stempel bestehen, der mit einem von einem Stellmotor angetriebenen Gewindebolzen in Eingriff steht.

Dabei ist zweckmäßigerweise unterhalb der Halteplatte eine topfförmige Flanschplatte befestigt, die mittig den Stellmotor trägt, von dem ein die Flanschplatte und die Halteplatte durchdringender Gewindebolzen angetrieben ist, welcher Gewindebolzen in Eingriff mit dem kastenförmig ausgebildeten Stempel steht, dessen Oberseite zur kraftschlüssigen Anlage an den zweiten Gummikörper bzw. die Abstützplatte bringbar ist.

Zur Führung sollte der kastenförmige Stempel auf seiner Unterseite zwei abragende Stege aufweisen, die die Halteplatte in Führungsschlitzen durchdringen.

Zweckmäßigerweise ist die Shore-A-Härte beider Federkörper ungefähr gleich groß.

Wesentlich für einen ordnungsgemäßen Betrieb ist, daß die aufzubringende Spreizkraft größer ist als die auftretenden Betriebskräfte in Form der statischen, abzustützenden Last und der dynamischen Betriebskräfte.

Diese Kraft sollte dabei etwa 5 Bar betragen.

Zur besseren Anpassung an unterschiedliche Bedingungen ist es zweckmäßig, wenn das Verhältnis von axialer zu radialer Steifigkeit des Lagers etwa 4,5 beträgt.

Ferner ist es von Vorteil, wenn der zweite Gummikörper unterschiedliche Radialsteifigkeiten in verschiedenen Querrichtungen aufweist.

Dabei ist es auch möglich, daß der erste Gummikörper in Aufsicht einen elliptischen Querschnitt bzw. eine elliptische Außenkontur aufweist.

Anhand einer schematischen Zeichnung sind Aufbau und Funktionsweise eines Ausführungsbeispiels nach der Erfindung näher erläutert. Da bei zeigen

Figur 1 einen Längsschnitt durch ein elastisches Lager bei wirksamer Reihenschaltung beider Gummikörper;

Figur 2 einen Längsschnitt durch dieses Lager mit Überbrückung des zweiten Gummikörpers durch ein hydraulisches Druckkissen;

Figur 3 einen Längsschnitt durch ein elastisches Lager mit abgewandeltem Gehäuseaufbau und

Figur 4 einen Längsschnitt durch ein solches Lager mit mechanischen Stellmitteln in Form eines kastenförmigen Stempels.

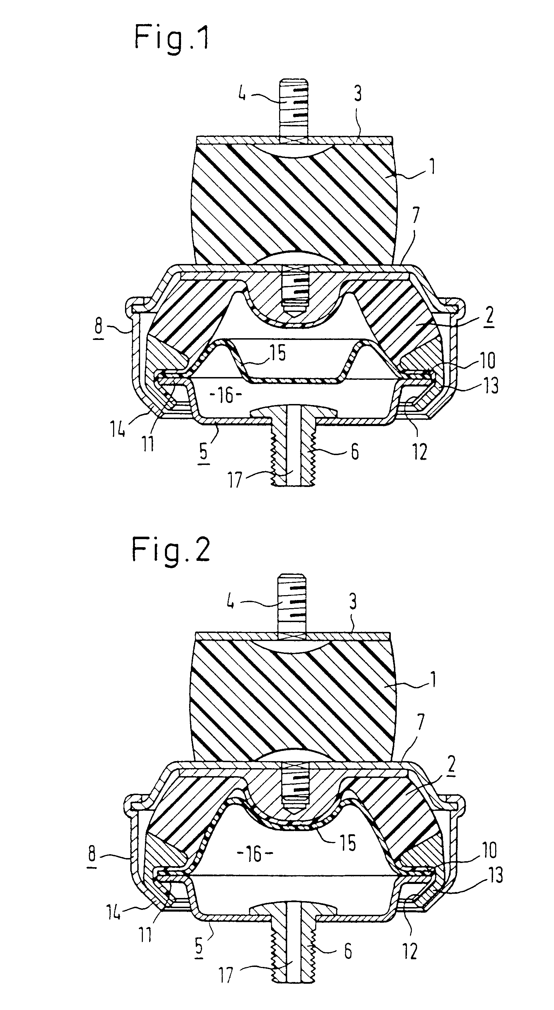

Wie man aus Fig. 1 ersieht, sind bei dem elastischen Lager zwei Gummikörper 1 und 2 in Reihe geschaltet, wobei der obere Gummikörper 1 eine Lagerplatte 3 mit Bolzen 4 zum nicht näher dargestellten Motor abstützt und der untere Gummikörper 2 auf einer Halteplatte 5 aufruht, die über einen entsprechenden Bolzen 6 an der Karosserie festgelegt ist.

Der obere Gummikörper 1 besteht aus einer zylindrischen Blockfeder, die in Aufsicht eine zylindrische oder auch eine elliptische Außenkontur aufweisen kann. Die untere Stirnseite des Gummikörpers 1 ist an einer Abstützplatte 7 anvulkanisiert, die bei der Montage in den oberen Rand eines topfförmigen Gehäuses 8, das den unteren Gummikörper 2 mit Abstand umschließt, eingerollt oder sonstwie mechanisch verbunden ist. Der untere Gummikörper 2 ist angenähert hohlkegelförmig ausgebildet und stützt sich mit seiner unteren Basis 10 auf den hochgezogenen Rand 11 der Halteplatte 5 ab. Dabei weist der hohlkegelförmige Gummikörper 2 am unteren Außenumfang einen Ansatz 12 auf, der derart schräg nach innen geneigt ist, daß er den äußeren Rand 11 der Halteplatte 5 umfaßt. Dieser Ansatz 12 kann aus einem an dem Gummikörper 2 anvulkanisierten Metallring 13 bestehen, der gegebenenfalls eine Gummiauflage aufweist.

Das Gehäuse 8 weist am unteren Rand einen schräg eingezogenen Rand 14 auf und zwar so, daß dieser Rand 14 mit radialem Freiweg zum Ansatz 12 verläuft.

Zwischen der Basis 10 des hohlkegelförmigen Gummikörpers 2 und dem Rand 11 der Halteplatte 5 ist nunmehr eine gewellte, flexible Membran 15 eingespannt, die zwischen sich und der Halteplatte 5 einen flüssigkeitsdichten Hohlraum 16 und damit praktisch ein hydraulisches Druckkissen bildet. Der Bolzen 6 weist eine zentrale Bohrung 17 auf, über die dann, wie noch später erläutert wird, eine Hydraulikflüssigkeit in den Hohlraum 16 eingepreßt werden kann.

Bei der in Fig. 1 gezeigten Stellung sind beide Gummikörper 1 und 2 in Reihe geschaltet und wirken gemeinsam, wobei sich insbesondere wegen der hohlkegelförmigen Gestaltung des unteren Gummikörpers 2 eine relativ weiche Federkennlinie ergibt, auch wenn beide Gummikörper 1 und 2 aus einem Material gleicher Shore-Härte gefertigt sind.

Wenn nun, wie das in Fig. 2 dargestellt ist, über den Kanal 17 Hydraulikflüssigkeit in den Hohlraum 16 eingepreßt wird, so wölbt sich die Membran 15 nach oben aus, bis sie an der Innenkontur des hohlkegelförmigen Gummikörpers 2 zur Anlage kommt. Bei entsprechendem Druck wird dann der Abstand zwischen der Abstützplatte 7 und der Halteplatte 5 unter entsprechender Längung des Gummikörpers 2 soweit vergrößert, daß der Rand 11 der Halteplatte 5 zusammen mit dem ringförmigen Ansatz 12 des Gummikörpers 2 am eingezogenen Rand 14 des Gehäuses 8 zur Anlage kommt. Damit ist eine kraftschlüssige Kopplung von Halteplatte 5 und Gehäuse 8 bei Aufrechterhaltung des Druckes im Hohlraum 16 erreicht. womit der Gummikörper 2 überbrückt ist und lediglich der obere, massive Gummikörper 1 in Wirkung bleibt. Damit ergibt sich jetzt eine sehr viel härtere Federsteifigkeit des Lagers mit einer steileren Federkennlinie.

Um eine dauerhafte und stabile Überbrückung des unteren Gummikörpers 2 sicherzustellen, muß die durch den Druck der Flüssigkeit im Hohlraum 16 erzeugte Kraft größer sein als die auf das Lager wirkenden Betriebskräfte, d.h. größer als die Summe aus statischer Last und der dynamischen Betriebskräfte. Dafür dürfte im allgemeinen ein Druck von etwa 5 Bar ausreichen.

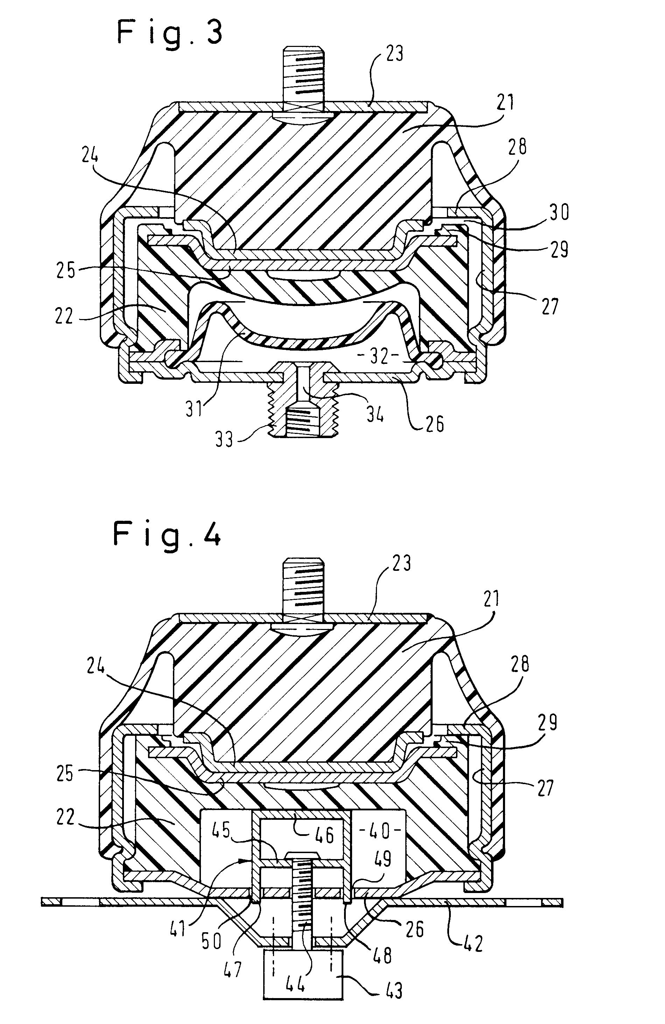

In Fig. 3 ist ein abgewandeltes Konstruktionsprinzip eines solchen elastischen Lagers dargestellt. Dabei ist zunächst ebenfalls ein erster zylindrischer Gummikörper 21 zwischen einer Motorlagerplatte 23 und einer Abstützplatte 24 einvulkanisiert. Der darunter liegende zweite Gummikörper 22 ist hohlzylindrisch ausgebildet und weist einen größeren Außendurchmesser als der obere Gummikörper 21 auf. Der Gummikörper 22 ist dabei an der oberen Stirnseite an eine Abstützplatte 25 gehaftet und am unteren Stirnrand an der Halteplatte 26 befestigt, die mit der Karosserie verbunden ist.

Der untere Gummikörper 22 ist jetzt von einem hohlzylindrischen Gehäuse 27 umgeben, das am unteren Ende mit der Halteplatte 26 verbunden ist und das am oberen Ende eine horizontale Einziehung 28 aufweist, die den überstehenden Rand 29 des zweiten Gummikörpers 22 teilweise überdeckt, wobei zwischen Einziehung 28 und Rand 29 ein vertikaler Spalt 30 freigelassen ist.

In der dargestellten Stellung wirken beide Gummikörper 21 und 22 zusammen in Reihenschaltung mit einer entsprechenden Federkennlinie.

Wie bei den Ausführungsbeispielen nach Fig. 1 und 2 ist hier ebenfalls zwischen der Halteplatte 26 und dem zweiten Gummikörper 22 eine flexible, gewellte Membran 31 eingespannt, die zwischen sich und der Halteplatte 26 einen Hohlraum 32 als Druckkissen einschließt. Der Haltebolzen 33 weist ebenfalls eine zentrale Bohrung 34 auf, über die eine Hydraulikflüssigkeit unter Druck in den Raum 32 eingepreßt werden kann.

Bei einem solchen Einpressen wölbt sich die Membran 31 nach oben, bis sie an die Oberseite des zweiten Gummikörpers 22 bzw. die Abstützplatte 25 zur Anlage kommt und streckt dabei den Gummikörper 22 so lange, bis der überstehende Rand 29 an der Einziehung 28 des Gehäuses 27 zur Anlage kommt, so daß damit der Spalt 30 überbrückt ist. Damit ist jetzt insgesamt der zweite Gummikörper 22 vom Gehäuse 27 überbrückt und außer Wirkung gebracht, so daß nur noch allein der Federkörper 21 mit größerer Federsteifigkeit in Wirkung bleibt.

Eine andere Möglichkeit einer Spreizung mit mechanischen Mitteln ist in Fig. 4 gezeigt, bei dem der Lageraufbau im Prinzip dem nach Fig. 3 entspricht. Hier ist in dem innenliegenden Hohlraum 40 des zweiten Gummikörpers 22 oberhalb der Halteplatte 26 ein kastenförmiger Stempel 41 angeordnet, der wie folgt betätigt wird. Unterhalb der Halteplatte 26 ist eine topfförmige Flanschplatte 42 befestigt, die mittig außenliegend einen Stellmotor 43 trägt, von dem aus ein Gewindebolzen 44 die Flanschplatte 42 und die Halteplatte 26 durchdringt und mit dem Quersteg 45 des kastenförmigen Stempels 41 in Eingriff steht.

Bei Einschalten des Stellmotors 43 und Drehen des Gewindebolzens 44 kann somit der Stempel 41 nach unten oder oben verfahren werden, bis die Oberseite 46 des Stempels 41 zur kraftschlüssigen Anlage an den zweiten Gummikörper 22 bzw. die Abstützplatten 24, 25 kommt und in gleicher Weise den zweiten Gummikörper 22 soweit streckt, daß der Spalt zwischen überstehendem Rand 29 und eingezogenem Flansch 28 des Gehäuses 27 überbrückt und damit der zweite Gummikörper 22 außer Funktion gebracht ist.

Zur besseren Führung des Stempels 41 kann dieser auf seiner Unterseite zwei abragende Stege 47 und 48 aufweisen, die die Halteplatte 26 in entsprechenden Führungsschlitzen 49 und 50 durchdringen.

Mit einer solchen Gestaltung und Funktionsweise eines reinen Gummilagers ist es also möglich, beispielsweise bei niedrigen Drehzahlen im Leerlauf eine weiche Kennung des Lagers zu erhalten, in dem beide Gummikörper hintereinander geschaltet sind, während bei Betriebsdrehzahlen und bei Fahrt des Fahrzeuges eine härtere Kennung durch Überbrückung des unteren Gummikörpers 2 bzw. 22 möglich ist.

Bei entsprechender geometrischer Gestaltung der beiden Gummikörper können diese die gleiche Shore-Härte aufweisen.

Ein weiterer Vorteil der erfindungsgemäßen Gestaltung dieses Lagers liegt darin, daß sich die Steifigkeit des Lagers nicht nur in axialer d.h. in vertikaler, sondern auch in radialer Richtung ändern kann, da die Gummikörper einen relativ großen radialen Freiweg aufweisen, der nur durch den Scherwiderstand des Gummis begrenzt wird. Mit der beschriebenen Gestaltung ist es dabei möglich, ein Steifigkeitsverhältnis von axialer zu radialer Steifigkeit von etwa 4,5 zu erhalten, die sich für die gewünschte Abstützung und Lagerung eines Motors als besonders günstig erwiesen hat.

Darüberhinaus ist auch beim unteren Gummikörper eine unterschiedliche Radialsteifigkeit in verschiedenen Querrichtungen möglich. Dies kann dadurch erreicht werden, daß dieser Federkörper in Aufsicht eine elliptische Außenkontur aufweist und im Innern mit entsprechend gestalteten und verteilten Hohlräumen versehen ist.

Insgesamt ergibt sich also ein reines Gummilager, bei dem mit einfachen Mitteln die Federsteifigkeit variiert und von einer weichen zu einer harten Kennung und umgekehrt eingestellt werden kann.

**Patentansprüche**

1. Verfahren zur Varation der Federsteifigkeit eines Elastomer-Lagers als Motorlager für Kraftfahrzeuge mit zwei, zumindest zeitweise in Reihe geschalteten Gummikörpern (1, 2; 21, 22), dadurch gekennzeichnet, daß von den beiden, in Reihe geschalteten Gummikörpern (1, 2; 21, 22) einer der beiden Gummikörper (2; 22) in Abhängigkeit vorgegebener Betriebsparameter zeitweise mittels einer gesonderten, von außen aufgebrachten Kraft derart von starren Bauteilen (8; 27) des Lagers überbrückt wird, daß nur noch der andere der beiden Gummikörper (1; 21) elastisch wirksam die eingeleiteten Kräfte aufnimmt.

2. Verfahren nach Anspruch 1, dadurch gekennzeichnet, daß die Überbrückung des zweiten Gummikörpers (2; 22) in Abhängigkeit von der Motordrehzahl erfolgt.

3. Verfahren nach Anspruch 1, dadurch gekennzeichnet, daß die Überbrückung mittels eines hydraulisch beaufschlagten Druckkissens (16; 32) erfolgt derart, daß zwei, die zweite Gummifeder (2; 22) zwischen sich einschließende starre Gehäuseteile (8, 5; 28, 25) kraftschlüssig miteinander in Kontakt gebracht werden.

4. Verfahren nach Anspruch 1, dadurch gekennzeichnet, daß die Überbrückung mittels mechanischer Stellmittel (41, 43) vorgenommen wird derart, daß zwei, die zweite Gummifeder (2; 22) zwischen sich einschließende Gehäuseteile (27, 25) durch Spreizung kraftschlüssig miteinander in Kontakt gebracht werden.

5. Elastisches Lager insbesondere Motorlager für Kraftfahrzeuge mit zwei in Reihe übereinander angeordneten Gummikörpern (1, 2; 21, 22), dadurch gekennzeichnet, daß die beiden Gummikörper (1, 2; 21, 22) rotationssymmetrisch ausgebildet sind, daß der eine Gummikörper (1; 21) zwischen einer Motorlagerplatte (3; 23) und einer Abstützplatte (7; 24) und der zweite Gummikörper (2; 22) zwischen dieser Abstützplatte (7; 24) und einer karosserieseitig angelenkten Halteplatte (5; 26) festgelegt sind und daß der zweite Gummikörper (2; 22) von einem diesen teilweise umfassenden, ringförmigen Gehäuse (8; 27) umgeben ist, dessen eine Stirnseite mit einer der beiden, die zweiten Gummikörper (2; 22) begrenzenden Platten (7; 26) starr verbunden und dessen andere Stirnseite den Rand der anderen Platte (5; 25) mit Spiel derart umfaßt, daß bei Einschalten eines Spreizmittels (15; 41) zwischen den beiden Platten (5, 7; 26, 25) diese in kraftschlüssiger Anlage zum Gehäuse (8; 27) kommen und den zweiten Gummikörper (2; 22) überbrücken.

6. Elastisches Lager nach Anspruch 5, dadurch gekennzeichnet, daß der zweite Gummikörper (2; 22) als rotationssymmetrischer Hohlkörper ausgebildet ist.

7. Elastisches Lager nach Anspruch 5 und 6, dadurch gekennzeichnet, daß der zweite Gummikörper (2) am unteren Außenumfang einen schräg nach innen geneigten, ringförmigen Ansatz (12) aus einem anvulkanisierten Metallring aufweist, der den hochgezogenen Rand (11) der karosserieseitigen Halteplatte (5) umgreift, und daß das ringförmige Gehäuse (8) oberseitig mit der Abstützplatte (7) starr verbunden ist und dessen unterseitiger, schräg eingezogener Rand (14) einen vertikalen Freiweg gegenüber der Unterseite des ringförmigen Ansatzes (12) aufweist.

8. Elastisches Lager nach Anspruch 5 und 6, dadurch gekennzeichnet, daß der zweite Gummikörper (22) einen größeren Außendurchmesser als der obere Gummikörper (21) aufweist und daß das ringförmige Gehäuse (27) unterseitig mit der karosserieseitigen Halteplatte (26) starr verbunden ist und oberseitig den radial überstehenden Bereich (29) des zweiten Gummikörpers (22) mit einem eingezogenen Rand (28) unter Bildung eines vertikalen Freiweges (30) übergreift.

9. Elastisches Lager nach Anspruch 5, 6 und 7 oder 8, dadurch gekennzeichnet, daß das Spreizmittel aus einem hydraulisch beaufschlagbaren Druckkissen (15; 31) besteht, daß durch eine zwischen dem zweiten Gummikörper (2; 22) und der karosserieseitigen Halteplatte (5; 26) eingespannten flexiblen Membran (15; 31) einerseits und der Halteplatte (5; 26) selbst andererseits begrenzt ist.

10. Elastisches Lager nach Anspruch 9, dadurch gekennzeichnet, daß die Halteplatte (5; 26) eine regelbare Zuführung (17; 34) für eine Hydraulikflüssigkeit aufweist.

11. Elastisches Lager nach Anspruch 5, 6 und 7 oder 8, dadurch gekennzeichnet, daß das Spreizmittel aus einem zwischen karosserieseitiger Halteplatte (26) und dem zweiten Gummikörper (22) angeordneten mechanischen Stempel (41) besteht, der mit einem von einem Stellmotor (43) angetriebenen Gewindebolzen (44) in Eingriff steht.

12. Elastisches Lager nach Anspruch 11, dadurch gekennzeichnet, daß unterhalb der Halteplatte (26) eine topfförmige Flanschplatte (42) befestigt ist, die mittig den Stellmotor (43) trägt, von dem ein die Flanschplatte (42) und die Halteplatte (26) durchdringender Gewindebolzen (44) angetrieben ist, welcher Gewindebolzen (44) in Eingriff mit dem kastenförmig ausgebildeten Stempel (41) steht, dessen Oberseite (46) zur kraftschlüssigen Anlage an den zweiten Gummikörper (26) bzw. die Abstützplatte (25) bringbar ist.

13. Elastisches Lager nach Anspruch 10, dadurch gekennzeichnet,, daß der kastenförmige Stempel (41) auf seiner Unterseite zwei abragende Stege (47, 48) aufweist, die die Halteplatte (26) in Führungsschlitzen (49, 50) durchdringen.

14. Elastisches Lager nach Anspruch 5, dadurch gekennzeichnet, daß die Shore-A-Härte beider Gummikörper (1, 2; 21, 22) ungefähr gleich groß ist.

15. Elastisches Lager nach Anspruch 5, dadurch gekennzeichnet, daß die Spreizkraft größer ist als die auftretenden Betriebskräfte in Form der statischen, abzustützenden Last und der dynamischen Betriebskräfte.

16. Elastisches Lager nach Anspruch 12, dadurch gekennzeichnet, daß der Anpreßdruck etwa 5 Bar beträgt.

17. Elastisches Lager nach einem der Ansprüche 5 bis 15, dadurch gekennzeichnet, daß das Verhältnis von axialer zu radialer Steifigkeit des Lagers etwa 4,5 beträgt.

18. Elastisches Lager nach Anspruch 5, dadurch gekennzeichnet, daß der zweite Gummikörper (2; 22) unterschiedliche Radialsteifigkeiten in verschiedenen Querrichtungen aufweist.

19. Elastisches Lager nach Anspruch 16, dadurch gekennzeichnet, daß der Gummikörper (2; 22) in Aufsicht einen elliptischen Querschnitt aufweist.

20. Elastisches Lager nach Anspruch 5, dadurch gekennzeichnet, daß der erste Gummikörper (1; 21) in Aufsicht eine elliptische Außenkontur aufweist.

Fig.1

Fig.2

Fig.3

Fig.4

# EUROPÄISCHER RECHERCHENBERICHT

**EP 91 11 7382**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 431 117 (OPEL)<br>* Seite 4, Zeile 28 - Seite 5, Zeile 10; Ansprüche 1,2; Abbildung * *<br>– – – | 1,5 | F 16 F 13/00<br>F 16 F 3/08<br>B 60 K 5/12 |
| A | GB-A-2 165 027 (CONTINENTAL)<br>* Seite 1, Zeile 37 - Zeile 74; Ansprüche 1-4; Abbildungen * *<br>– – – | 1 | |
| A | PATENT ABSTRACTS OF JAPAN vol. 10, no. 62 (M-460)(2119) 12. März 1986<br>& JP-A-60 208 651 ( TOUKAI GOMO KOGYO ) 21. Oktober 1985<br>* Zusammenfassung * *<br>– – – | 1,9,10 | |
| A | FR-A-2 272 857 (PEUGEOT)<br>* Seite 6, Zeile 14 - Zeile 25; Ansprüche 8,11; Abbildung 7 *<br>*<br>– – – | 1,5-10 | |
| A | US-A-4 756 513 (CARLSON ET AL.)<br>* Spalte 3, Zeile 51 - Spalte 4, Zeile 16; Anspruch 1; Abbildungen 1,2 * *<br>– – – | 1,2 | |
| A | PATENT ABSTRACTS OF JAPAN vol. 10, no. 10 (M-446)(2067) 16. Januar 1986<br>& JP-A-60 172 742 ( NISSAN JIDOSHA ) 6. September 1985<br>* Zusammenfassung * *<br>– – – – – | 1 | |

**RECHERCHIERTE SACHGEBIETE (Int. Cl.5)**

F 16 F
B 60 K
B 60 G

Der vorliegende Recherchenbericht wurde für alle Patentansprüche erstellt

| Recherchenort | Abschlußdatum der Recherche | Prüfer |
|---|---|---|
| Den Haag | 17 Januar 92 | NORDLUND J.O. |